# EUROPÄISCHE PATENTANMELDUNG

(11) **EP 1 705 594 A2**
(43) Veröffentlichungstag der Anmeldung: **27.09.2006**
(21) Anmeldenummer: 06005436.8
(22) Anmeldetag: 16.03.2006
(51) Int. Cl.: G06F 21/00

(54) **Verfahren und Vorrichtung zur manipulationssicheren Ermittlung von Empfängern in einem Kommunikationssystem**

(30) Priorität: 24.03.2005 DE 102005013800
(71) Anmelder: webmiles GmbH, 81673 München (DE)
(72) Erfinder: Schwabe, Andreas, 81677 München (DE)
(74) Vertreter: Beetz & Partner

(57) **Zusammenfassung**

Die Erfindung betrifft ein Verfahren und eine Vorrichtung zur manipulationssicheren Ermittlung von Empfängern in einem Kommunikationssystem sowie ein Verfahren und eine Vorrichtung zur manipulationssicheren Verwaltung von Benutzerkonten. Eine Vorrichtung zur manipulationssicheren Ermittlung von Empfängern (30) umfasst Transaktionscodeerzeugungsmittel (1) zum Erzeugen von eindeutigen Transaktionscodes und Zuordnen jeweils einer Wertigkeit; Datenbankspeichermittel (2) zum Abspeichern der Transaktionscodes und Wertigkeiten; Transaktionscodeanordnungsmittel (3) zum Anordnen der Transaktionscodes in zumindest zwei Teilcodes; Ausgabemittel (4) zum Ausgeben der ersten Teilcodes der Transaktionscodes zu einem ersten Zeitpunkt; Übermittlungsmittel (5) zum Übermitteln des zweiten Teilcodes zu dem zweiten Zeitpunkt über einen ersten Kommunikationskanal (11) an empfangsbereite Empfänger (30); Empfangsmittel (6) zum Empfangen von den Empfängern (30) gesendeten, zusammengesetzten Transaktionscodes über einen zweiten Kommunikationskanal (12) zusammen mit Empfängeridentifikationsdaten (30); Verifikationsmittel (7) zum Überprüfen der Gültigkeit der empfangenen Transaktionscodes; Datenbankauslesemittel (8) zum Ermitteln der Wertigkeiten der Transaktionscodes; und Verrechnungsmittel (9) zum Verrechnen der ermittelten Wertigkeiten auf den Empfängern (30) zugeordneten Konten.

## Beschreibung

Die vorliegende Erfindung betrifft ein Verfahren und eine Vorrichtung zur manipulationssicheren Ermittlung von Empfängern in einem Kommunikationssystem sowie ein Verfahren und eine Vorrichtung zur manipulationssicheren Verwaltung von Benutzerkonten.

In einem Kommunikationssystem besteht oftmals das Problem, dass die Identitäten von Empfängern, die zu einem bestimmten Zeitpunkt empfangsbereit sind, ermittelt werden müssen. Ein Beispiel für eine Anwendung, in der die Ermittlung der Identitäten von empfangsbereiten Empfängern von großer Bedeutung ist, ist ein Abrechnungssystem zur Abrechnung von in Anspruch genommenen Diensten des Kommunikationssystems. Beispielsweise bei Unterhaltungsmedien, wie kostenpflichtige Radio- oder Fernsehprogramme und Video-on-demand-Systeme, ist es oft erforderlich, diejenigen Empfänger bzw. Benutzer zu ermitteln, die das Kommunikationssystem zu einem bestimmten Zeitpunkt oder in Zusammenhang mit einem bestimmten Ereignis nutzen bzw. empfangsbereit sind. Anhand der ermittelten Empfänger- bzw. Benutzeridentifikationsdaten können dann die in Anspruch genommenen Dienste abgerechnet werden, z.B. indem Empfänger- bzw. Benutzerkonten entsprechend aktualisiert werden. Eine ähnliche Problematik besteht auch bei Bonussystemen, bei denen ein Benutzer für in Anspruch genommene Dienste einen Bonus erhält, der dann auf seinem Benutzerkonto gutgeschrieben wird.

Bekannt und relativ unproblematisch ist die Ermittlung von Empfängern in einem Kommunikationssystem mit einem Kommunikationskanal, der eine bidirektionale Datenübermittlung erlaubt. In diesem Fall können empfangsbereite Empfänger, die von dem Kommunikationskanal Daten bzw. einen Dienst, wie ein Musikstück oder einen Film, empfangen, dazu veranlasst werden, unmittelbar nach Empfang eine Empfangsbestätigung an den Sender über den Rückkanal des Kommunikationskanals zu senden. Um Manipulationen zu verhindern, können die Empfänger zuvor mit eindeutigen Transaktionscodes versehen werden, welche dann von den Empfängern als Empfangsbestätigung zurückgesendet werden.

Die obige Vorgehensweise hat jedoch den Nachteil, dass, wenn der Kommunikationskanal des Kommunikationssystems keinen Rückkanal aufweist oder aus einem anderen Grunde ein anderes Kommunikationsmittel bzw. ein anderer Kommunikationskanal für das Zurücksenden der Empfangsbestätigung verwendet wird, der unmittelbare Zusammenhang zwischen empfangenem Dienst und zurückgesendetem Transaktionscode verloren geht und Manipulationen durch den Benutzer möglich sind. So könnte ein Benutzer durch Zurücksenden eines anderen Transaktionscodes, der jedoch nur einem geringerwertigen Dienst bzw. geringerwertigen empfangenen Daten entspricht, die Abrechnung dieses Dienstes bzw. der Daten manipulieren.

Es ist deshalb die Aufgabe der vorliegenden Erfindung, eine manipulationssichere Ermittlung von Empfängern in einem Kommunikationssystem und eine manipulationssichere Verwaltung von Benutzerkonten zu ermöglichen, insbesondere wenn eine Rückmeldung über einen empfangsbereiten Empfänger bzw. einen in Anspruch genommenen Dienst über einen anderen Rückkanal erfolgt.

Diese Aufgabe wird mit den Verfahren und Vorrichtungen gemäß den unabhängigen Patentansprüchen gelöst. Die abhängigen Patentansprüche betreffen vorteilhafte Ausgestaltungen der Erfindung.

Zur manipulationssicheren Ermittlung von Empfängern in einem Kommunikationssystem können eindeutige Transaktionscodes mit jeweilig zugeordneten Wertigkeiten erzeugt und in einer Datenbank abgespeichert werden. Die Erzeugung der Transaktionscodes kann in einem Zentralrechner mit einem geeigneten Algorithmus erfolgen, der sicherstellt, dass jeder Transaktionscode nur einmal vorhanden, d.h. eindeutig ist. Die den Transaktionscodes zugeordneten Wertigkeiten können dem Wert eines Dienstes, wie z.B. eine Radio- oder Fernsehsendung bzw. ein Spielfilm, oder dem Wert von übermittelten Daten, wie z.B. Audio-, Video- oder Bilddaten, entsprechen. Umgekehrt ist es auch möglich, dass eine Wertigkeit einem Bonus entspricht, welcher ein Benutzer für die Verwendung eines Dienstes erhalten kann. Die Transaktionscodes können unterschiedliche Wertigkeiten aufweisen, zumindest ein Teil der Transaktionscodes kann jedoch auch eine gleiche Wertigkeit besitzen.

Die Transaktionscodes können zusammen mit den zugeordneten Wertigkeiten in einer Datenbank abgespeichert werden, wobei hierbei insbesondere elektronische Datenbanken von Vorteil sind und beliebige Datenbankrealisierungen auf einem Computersystem zur Speicherung der Transaktionscodes geeignet sind.

Vor oder nach dem Abspeichern der Transaktionscodes können die Transaktionscodes in zumindest zwei Teilcodes angeordnet werden. Dies kann geschehen, indem ein erzeugter Transaktionscode beispielsweise in zwei Teile aufgeteilt wird oder indem zwei getrennte Teilcodes erzeugt und zu einem eindeutigen Transaktionscode zusammengesetzt werden. Für die Anordnung der Transaktionscodes ergeben sich viele Möglichkeiten, wobei die einzelnen Teilcodes nicht gleich groß zu sein brauchen. Ein Teilcode kann beispielsweise aus mehreren, nebeneinander liegenden Stellen eines Transaktionscodes bestehen.

Vorzugsweise besteht ein Transaktionscode aus einer Vielzahl von in einer Reihe angeordneten Zeichen. Um die Vielfalt und die mögliche Anzahl von Transaktionscodes zu erhöhen, ist es zweckmäßig, dass jede einzelne Stelle eines mehrstelligen Transaktionscodes aus einer Zahl oder einem Buchstaben besteht. Die Anzahl der Stellen wird vorzugsweise so gewählt, dass eine vorgegebene Anzahl von eindeutigen Transaktionscodes erzeugt werden kann, wobei zu beachten ist, dass der Raum der möglichen Transaktionscodes nicht vollständig besetzt ist, um eine Verifikation der Gültigkeit von Transaktionscodes zu ermöglichen. Bevorzugte Transaktionscodes haben 10 bis 16, beispielsweise 14, alphanumerische Stellen.

Die erzeugten ersten Teilcodes der Transaktionscodes können dann zu einem ersten Zeitpunkt ausgegeben werden. Die Ausgabe der ersten Teilcodes erfolgt vorzugsweise derart, dass die Empfänger die ausgegebenen Teilcodes direkt oder indirekt erhalten. Die Art der Übertragung der ersten Teilcodes an die Empfänger ist beliebig. Beispielsweise können die ersten Teilcodes in den Empfängern fest vorgesehen sein, indem sie z.B. bei der Herstellung der Empfänger diesen fest zugeordnet werden. Die ersten Teilcodes können auch auf beliebigem Wege an die Empfänger verteilt, dort gespeichert und bereit gehalten werden.

Die zweiten oder weiteren Teilcodes können dann von dem Zentralrechner über einen ersten Kommunikationskanal des Kommunikationssystems an empfangsbereite Empfänger übermittelt werden. In der Regel erfolgt diese Übermittlung der zweiten Teilcodes zu einem späteren, zweiten oder weiteren Zeitpunkt. Die Art der Übermittlung ist beliebig, wobei vorzugsweise ein Broadcast-Verfahren eingesetzt wird, so dass alle empfangsbereiten Empfänger gleichzeitig den zweiten Teilcode von dem ersten Kommunikationskanal erhalten. In diesem Fall ist es von Vorteil, wenn die zweiten Teilcodes für alle Empfänger gleich sind.

Ein Empfänger im Sinne dieser Anmeldung ist ein Teilnehmer des Kommunikationssystems, insbesondere eine Empfangseinrichtung oder ein Benutzer des Kommunikationssystems, der mit dem Kommunikationssystem zusammenwirkt und von diesem Daten, Signale oder Nachrichten empfangen kann, die zu einer Dienstleistung bzw. einem Dienst gehören, welche der Empfänger über das Kommunikationssystem empfängt. Zweckmäßigerweise ist der Empfänger entsprechend dem verwendeten Kommunikationssystem zum Empfang der übermittelten Information eingerichtet.

Gemäß einem bevorzugten Ausführungsbeispiel der Erfindung ist das Kommunikationssystem ein Mobilfunksystem (z.B. GSM oder UMTS) und bei den Empfängern handelt es sich um Mobilfunkendgeräte (z.B. mobile Telefone, mobile Kommunikationsgeräte, tragbare Computer mit Mobilfunkanschluss). Bei dem Kommunikationssystem kann es sich aber auch um ein Rundfunksystem handeln, mit dem Radio- oder Fernsehprogramme bzw. Audio- oder Videoinformation (analog oder digital) an Empfänger oder Benutzer gesendet werden. Ein Empfänger kann beispielsweise ein Rundfunkteilnehmer sein, der den zweiten Teilcode über ein Rundfunksystem erhält. Die Art der Daten- oder Informationsübertragung an die Empfänger und die Realisierung des Kommunikationskanals ist beliebig.

Die Empfänger bzw. Benutzer können die empfangenen Teilcodes nach Empfang des letzten Teilcodes (z.B. des zweiten Teilcodes zu dem zweiten Zeitpunkt) zu einem Transaktionscode zusammensetzen und den zusammengesetzten Transaktionscode über einen zweiten Kommunikationskanal zusammen mit eindeutigen Identifikationsdaten der Empfänger wieder an den Herausgeber der Transaktionscodes zurücksenden. Dies ist jedoch nur möglich, wenn ein Empfänger auch alle Teilcodes, die notwendig sind, um einen Transaktionscode zusammenzusetzen, empfangen hat. Zweckmäßigerweise ist ein Empfänger so ausgebildet, dass er automatisch die empfangenen Teilcodes miteinander kombiniert und den daraus gebildeten, zusammengesetzten Transaktionscode zu einem geeigneten Zeitpunkt an den Zentralrechner zurücksendet.

Die von den Empfängern gesendeten, zusammengesetzten Transaktionscodes und Empfängeridentifikationsdaten können von dem Zentralrechner empfangen und ausgewertet werden, um festzustellen, welche Empfänger z.B. zu dem zweiten Zeitpunkt empfangsbereit waren.

Anschließend kann die Gültigkeit der empfangenen Transaktionscodes, z.B. durch Vergleich mit denen in der Datenbank abgespeicherten Transaktionscodes, überprüft werden, um festzustellen, ob die von den Empfängern zusammengesetzten Teilcodes einen gültigen Transaktionscode ergeben. Auf diese Weise kann verhindert werden, dass die Empfänger bzw. Benutzer beliebige Teilcodes zusammensetzen. Die Überprüfung der Gültigkeit der empfangenen Teilcodes kann aber auch durch andere Maßnahmen vorgenommen werden, wie einer Überprüfung durch einen Algorithmus, der eine Check-Summe, eine Quersumme oder eine Parität bildet. Durch die Verifikation der empfangenen Transaktionscodes kann eine Manipulation der Transaktionscodes durch die Empfänger erkannt und ungültige Transaktionscodes ausgesondert werden. Zweckermäßigerweise werden nur als gültig markierte Transaktionscodes einer weiteren Auswertung unterworfen.

Die Wertigkeiten der empfangenen gültigen Transaktionscodes können, z.B. durch Auslesen der Datenbank, ermittelt und auf jeweiligen, den Empfängern zugeordneten Konten verrechnet werden. Vorzugsweise wird für jeden Empfänger bzw. Benutzer ein Konto zur Verrechnung der Wertigkeiten geführt, wobei die Empfänger bzw. Benutzer anhand der mit den zusammengesetzten Transaktionscodes empfangenen Identifikationsdaten der Empfänger bzw. Benutzer bestimmt werden. Die eindeutigen Identifikationsdaten erlauben eine Identifikation des Empfängers bzw. Benutzers und sind beispielsweise dessen Adresse im Kommunikationssystem, seine Telefonnummer oder seine E-Mail-Adresse.

Die oben dargelegten Verarbeitungsschritte können, ohne von der Grundidee der vorliegenden Erfindung abzuweichen, auch in einer anderen Reihenfolge ausgeführt werden. So ist es beispielsweise möglich, dass die erzeugten Transaktionscodes zuerst in zwei Teilcodes angeordnet und anschließend gespeichert werden.

Die vorliegende Erfindung erlaubt eine manipulationssichere Ermittlung derjenigen Empfänger, die zu einem oder mehreren vorbestimmten Zeitpunkten empfangsbereit waren und von einem ersten Kommunikationskanal entsprechende Teilcodes übernommen haben, da nur dann ein gültiger Transaktionscode aus den Teilcodes zusammengesetzt werden kann. Durch die Zuordnung von Wertigkeiten zu den Transaktionscodes kann eine detaillierte Abrechnung erstellt werden, die nach unterschiedlichen Empfängern/Benutzern und/oder zu verschiedenen Zeitpunkt erhaltene Information bzw. Dienste unterscheiden kann.

Den Wertigkeiten der Transaktionscodes können hierbei unterschiedliche Bedeutungen zukommen. Zum einen können sie derart gestaltet sein, dass sie das Zählen der empfangsbereiten Empfänger ermöglichen (z.B. alle Wertigkeiten gleich eins). Andererseits können sie auch einem finanziellen Wert der erhaltenen Information entsprechen und so beispielsweise die Abrechnung von erhaltenen Dateien, Videofilmen, Musikclips, Bildern, oder ähnlichem ermöglichen. Umgekehrt können die Wertigkeiten auch Bonuspunkten entsprechen, die einem empfangsbereiten Empfänger zugeschrieben werden, wenn dieser zu einem bestimmten Zeitpunkt an das Kommunikationssystem angeschlossen ist und empfängt. Durch die Erfindung können dem Empfänger dann manipulationssicher entsprechende Bonuspunkte (Wertigkeiten) auf seinem Konto zugeordnet werden, auch ohne dass das Kommunikationssystem einen direkten Rückkanal vorsieht, über den sich die Empfänger zu dem bestimmten zweiten Zeitpunkt anmelden bzw. rückmelden müssen. Stattdessen ermöglicht es die Erfindung, dass die zusammengesetzten Teilcodes über einen zweiten, unabhängigen Kommunikationskanal, der auch nicht dem Kommunikationssystem angehören muss, zu einem beliebigen, späteren (dritten) Zeitpunkt zurückgesendet werden können.

Durch die Überprüfung der Gültigkeiten der empfangenen Transaktionscodes können Manipulationen erkannt und manipulierte Transaktionscodes verworfen werden. Empfänger bzw. Benutzer, die einen manipulierten Transaktionscode zurückgesendet haben, können gesperrt, an einem Empfang des ersten Kommunikationskanals gehindert oder aus dem Kommunikationssystem ausgeschlossen werden.

Es ist von besonderem Vorteil, wenn das Anordnen der Transaktionscodes in zwei Teilcodes derart erfolgt, dass der erste Teilcode für die Empfänger individuell und der zweite Teilcode für alle Empfänger gleich ist. Die ersten, individuellen Teilcodes werden dann zu dem ersten Zeitpunkt ausgegeben und an die Empfänger bzw. Benutzer verteilt, während der zweite, gemeinsame Teilcode zu dem zweiten Zeitpunkt über den ersten Kommunikationskanal an empfangsbereite Empfänger übermittelt wird. Bei der Erzeugung der eindeutigen Transaktionscodes ist in diesem Fall darauf zu achten, dass der Teil der Transaktionscodes, der dem zweiten Teilcode entspricht, für alle erzeugten Transaktionscodes gleich ist. Beispielsweise können die ersten drei Stellen der Transaktionscodes als zweite Teilcodes für alle erzeugten Transaktionscodes gleich sein. In gleicher Weise können die Transaktionscodes in mehr als zwei Teilcodes angeordnet werden, wobei die zweiten und weiteren Teilcodes für alle Empfänger gleich sein können und zu zweiten und weiteren Zeitpunkten über den ersten Kommunikationskanal an empfangsbereite Empfänger übermittelt werden können.

Die Verteilung der ersten Teilcodes an die Empfänger bzw. Benutzer kann über einen dritten Kommunikationskanal erfolgen, der eine individuelle Übermittlung der ersten Teilcodes an die Empfänger ermöglicht. Auf diese Weise kann jedem Empfänger ein erster Teilcode übermittelt werden. Dies ist besonders dann von Vorteil, wenn die Transaktionscodes so gestaltet sind, dass der erste Teilcode für die einzelnen Empfänger jeweils unterschiedlich ist.

Die Anordnung der Transaktionscodes in Teilcodes muss nicht der Reihenfolge entsprechen, mit der die einzelnen Teilcodes ausgegeben bzw. übermittelt werden. Der erste Teilcode, der zu dem ersten Zeitpunkt ausgegeben wird, kann beispielsweise auch einem zweiten Teil des Transaktionscodes, d.h. den weiter rechts liegenden Stellen des Transaktionscodes entsprechen. Der zweite Teilcode würde in diesem Fall dann den führenden Stellen des Transaktionscodes entsprechen.

Da zwischen der Ausgabe der ersten Teilcodes zu dem ersten Zeitpunkt und der Übermittlung des zweiten Teilcodes zu dem zweiten Zeitpunkt eine beliebige Zeitdauer liegen kann, ist es von Vorteil, wenn die ersten Teilcodes über einen Informationsträger, der die ersten Teilcodes dauerhaft speichert, an die Empfänger verteilt werden. Die ersten Teilcodes können beispielsweise auf einen Datenträger wie eine Diskette ausgegeben, verteilt, von den Empfängern gelesen und gespeichert werden. Als Informationsträger für die ersten Teilcodes sind auch andere Kommunikationsmittel geeignet, wie E-Mail oder Printmedien. Die ersten Teilcodes können auch bereits bei der Herstellung der Empfänger in diese eingebracht und dort gespeichert werden.

Zweckmäßigerweise wird der zweite oder weitere Teilcode derart über den ersten Kommunikationskanal übermittelt, dass er zu dem zweiten oder weiteren Zeitpunkt für eine vorgegebene Zeitdauer den Empfängern zum Empfang angeboten wird. Die auf dem ersten Kommunikationskanal empfangsbereiten Empfänger können so den zweiten Teilcode übernehmen und zur weiteren Verarbeitung bereithalten. Die Übernahme kann z.B. während der vorgegebenen Zeitdauer erfolgen, während der der zweite Teilcode auf einer Anzeigeeinheit dargestellt wird. Ein Benutzer kann während dieser Zeitdauer den zweiten Teilcode der Anzeigeeinheit entnehmen und anschließend mit dem ersten Teilcode zu einem zusammengesetzten Transaktionscode zusammenfügen. Als Anzeigeeinheit sind beliebige Anzeigemittel geeignet, welche Daten bzw. Information vom ersten Kommunikationskanal in visueller Form oder als Audioinformation darstellen können. Hierfür sind insbesondere Bildschirme, Monitore, Rundfunkempfänger oder Audiosysteme geeignet.

Eine Information zur Identifizierung des zweiten oder weiteren Teilcodes kann beispielsweise über den ersten Kommunikationskanal drahtlos in Form eines Broadcast-Verfahrens übertragen werden. Ein Broadcast-Verfahren ermöglicht, dass eine Vielzahl von Empfängern gleichzeitig an der Übertragung teilnehmen und die Information zur Identifizierung des zweiten Teilcodes gleichzeitig vom ersten Kommunikationskanal empfangen können. Broadcast-Verfahren können in Rundfunk- und Fernsehsystemen zur Übertragung eines Radio- oder Fernsehsignals an eine Vielzahl von Rundfunkempfängem sowie zur Verteilung von Information oder Daten (Streaming) im Internet eingesetzt werden. Auch bei Mobilfunksystemen gibt es (logische) Kanäle, die von allen Empfängern abgehört werden, z.B. zum Empfang von Signalisierungsinformation. Derartige gemeinsame Kanäle eines Mobilfunk-systems können auch zur Verteilung (Broadcast) von Audio- oder Videodaten an Mobilfunkteilnehmer verwendet werden. Auf diese Weise wird es möglich, mit einem Mobilfunkendgerät Radio zu hören oder ein Fernsehprogramm zu sehen. Zum Verteilen (Broadcast) von Daten in Form kodierter Textinformation über ein Rundfunksystem kann auch das Videotextsystem oder das Radiodatensystem RDS verwendet werden.

Die vorliegende Erfindung ist besonders zweckmäßig, wenn der erste und zweite Zeitpunkt zum Verteilen der Teilcodes unterschiedlich sind. In diesem Fall können die Transaktionscodes für ein bestimmtes Ereignis, das zu dem zweiten Zeitpunkt stattfindet und über den ersten Kommunikationskanal beobachtbar ist (z.B. die Übermittlung von bestimmten Audio- oder Videodaten oder das Ausstrahlen eines Rundfunk- oder Fernsehprogramms), erzeugt werden, um festzustellen, welche Empfänger das bestimmte Ereignis beobachten. Diese Empfänger können zu einem späteren Zeitpunkt, nachdem sie Transaktionscodes und Empfängeridentifikationsdaten übermittelt haben, eindeutig anhand des Zusammenhangs zwischen Transaktionscodes und dem bestimmten Ereignis ermittelt werden.

Vorzugsweise beobachtet ein Empfänger bzw. Benutzer den ersten Kommunikationskanal und reagiert auf die Übermittlung des zweiten oder eines weiteren Teilcodes durch ein Abspeichern des zweiten oder weiteren Teilcodes, ein Zusammenfügen der empfangenen Teilcodes zu einem zusammengesetzten Transaktionscode und ein Übertragen des zusammengesetzten Transaktionscodes zu einem späteren, dritten Zeitpunkt über den zweiten Kommunikationskanal zusammen mit den Empfängeridentifikationsdaten. Ebenso kann ein Benutzer empfangene Teilcodes zu einem zusammengesetzten Transaktionscode zusammenfügen und zusammen mit seinen Benutzeridentifikationsdaten zurücksenden.

Die Übertragung der zusammengesetzten Transaktionscodes und der eindeutigen Empfänger- bzw. Benutzeridentifikationsdaten über den zweiten Kommunikationskanal erfolgt vorzugsweise mittels eines Mobilfunknachrichtendienstes, insbesondere Short Message Service SMS oder Mulitmedia Message Service MMS, über das Internet oder per Post. Hierbei kann eine Teilnehmeridentifikation, insbesondere eine Mobilfunkteilnehmernummer oder eine E-Mail-Adresse, als Identifikationsdaten für einen Empfänger oder Benutzer herangezogen werden. Auf diese Weise ist eine einfache Identifikation des Empfängers bzw. Benutzers möglich, ohne dass dieser zusätzliche Daten zu seiner Identifikation zur Verfügung stellen, eingeben oder übertragen muss.

Zur Überprüfung der Gültigkeit von empfangenen Transaktionscodes ist es von Vorteil, wenn zurückgesendete, zusammengesetzte Transaktionscodes beim erstmaligen Empfang als "verbraucht" gekennzeichnet werden. Dies kann beispielsweise durch Eintragen einer entsprechenden Information in der Datenbank erfolgen. Wird der gleiche Transaktionscode ein weiteres Mal empfangen, so kann durch Überprüfung der Datenbank festgestellt werden, dass dieser Transaktionscode bereits verbraucht ist und der empfangene Transaktionscode wird als "ungültig" gekennzeichnet. Auf diese Weise wird verhindert, dass ein Transaktionscode von einem oder mehreren Empfängern bzw. Benutzern mehrfach verwendet wird.

Gemäß einer besonders zweckmäßigen Ausgestaltung der Erfindung wird jedem Transaktionscode eine Gültigkeitsdauer zugeordnet. Die Gültigkeitsdauer der einzelnen Transaktionscodes kann beispielsweise in der Datenbank gespeichert werden. Zurückgesendete Transaktionscodes werden dann nur bei einem Empfang innerhalb ihrer Gültigkeitsdauer als "gültig" gekennzeichnet und weiter ausgewertet. Zu spät eingehende Transaktionscodes werden verworfen. Durch Zuordnen einer Gültigkeitsdauer zum Transaktionscode kann die Manipulationssicherheit der erfindungsgemäßen Ermittlung von Empfängern weiter erhöht werden. Es ist auch möglich, nicht zurückgesendete Transaktionscodes nach Ablauf ihrer Gültigkeitsdauer und einer weiteren Zeitdauer erneut zu verwenden, ihnen beispielsweise andere Wertigkeiten zuzuordnen und sie erneut an die Empfänger zu verteilen.

Bei Empfang eines zurückgesendeten, zusammengesetzten Transaktionscodes kann die Datenbank durch Eintragen der Empfängeridentifikationsdaten desjenigen Empfängers, der den gültigen Transaktionscode zurückgesendet hat, aktualisiert werden. Auf diese Weise kann eine Liste der Empfänger, die zu dem ersten Zeitpunkt empfangsbereit waren, erstellt werden.

Weiterhin kann eine Nachricht an einen Empfänger, der einen gültigen Transaktionscode zurückgesendet hat, gesendet werden, um diesen beispielsweise über die Gültigkeit des empfangenen Transaktionscodes zu informieren. Die Nachricht kann z.B. über den dritten Kommunikationskanal übermittelt werden.

Für einen Empfänger, der einen gültigen Transaktionscode zurückgesendet hat, sieht eine Ausgestaltung der Erfindung vor, dass ein neuer Transaktionscode erzeugt wird. Der erste Teilcode dieses neuen Transaktionscodes kann sodann an den Empfänger übermittelt werden, damit dieser weiterhin an den erfindungsgemäßen Verfahren teilnehmen kann.

Selbstverständlich kann die Erfindung dahingehend erweitert werden, dass ein dritter und/oder vierter Teilcode zu einem Transaktionscode erzeugt wird. Der dritte und/oder vierte Teilcode kann dann zu einem dritten bzw. vierten Zeitpunkt über den ersten Kommunikationskanal an die Empfänger übermittelt werden. Ein Empfänger setzt nach Empfang aller Teilcodes diese zu einem zusammengesetzten Transaktionscode zusammen, um diesen anschließend zurückzusenden. Auf diese Weise können diejenigen Empfänger ermittelt werden, die zu dem zweiten und dritten und gegebenenfalls auch vierten Zeitpunkt am ersten Kommunikationskanal empfangsbereit waren. Dieses Schema ist mit einer beliebigen Anzahl von Teilcodes erweiterbar.

Eine Vorrichtung zur manipulationssicheren Ermittlung von Empfängern in einem Kommunikationssystem kann Transaktionscodeerzeugungsmittel zum Erzeugen von eindeutigen Transaktionscodes und Zuordnen jeweils einer Wertigkeit zu den erzeugten Transaktionscodes aufweisen. Weiterhin können Datenbankspeichermittel zum Abspeichern der Transaktionscodes mit den zugeordneten Wertigkeiten in einer Datenbank vorgesehen sein. Die Anordnung der Transaktionscodes in zumindest zwei Teilcodes erfolgt zweckmäßigerweise mittels Transaktionscodeanordnungsmittel. Weiter können Ausgabemittel zum Ausgeben der ersten Teilcodes der Transaktionscodes zu einem ersten Zeitpunkt vorgesehen sein. Die Vorrichtung kann über Übermittlungsmittel zum Übermitteln des zweiten Teilcodes zu einem zweiten Zeitpunkt über einen ersten Kommunikationskanal des Kommunikationssystems an empfangsbereite Empfänger verfügen. Empfangsmittel können von den Empfängern über einen zweiten Kommunikationskanal zusammen mit eindeutigen Identifikationsdaten der Empfänger gesendete, zusammengesetzte Transaktionscodes empfangen. Zum Überprüfen der Gültigkeit der empfangenen Transaktionscodes durch Vergleich mit den in der Datenbank abgespeicherten Transaktionscodes können Verifikationsmittel vorgesehen sein. Datenbankauslesemittel können zum Ermitteln der Wertigkeiten der empfangenen, gültigen Transaktionscodes aus der Datenbank verwendet werden. Zum Verrechnen der ermittelten Wertigkeiten auf jeweilige, den Empfängern zugeordnete Konten kann die Vorrichtung Verrechnungsmittel aufweisen.

Zweckmäßigerweise bewirken die Ausgabemittel die Speicherung des ersten Teilcodes auf einem Speichermedium, das anschließend an die Empfänger verteilt wird. Die Ausgabemittel können die ersten Teilcodes über einen Nachrichtendienst, insbesondere einen SMS-Dienst oder einen E-Mail-Dienst, an die Empfänger verteilen. Die Ausgabe der ersten Teilcodes kann derart erfolgen, dass die Benutzer jeweils individuelle erste Teilcodes über ein Kommunikationsmedium erhalten. Die Benutzer können die ersten Teilcodes auch mittels eines elektronischen Nachrichtendienstes, per Post oder über ein Printmedium erhalten.

Vorzugsweise übermitteln die Übermittlungsmittel die zweiten Teilcodes derart über den ersten Kommunikationskanal, dass Information zur Identifizierung des zweiten Teilcodes zu dem zweiten Zeitpunkt gleichzeitig einer Vielzahl der Empfänger zugeführt wird. Die Übermittlungsmittel können auch eine Anzeige des zweiten Teilcodes für eine vorgegebene Zeitdauer auf einer Anzeigevorrichtung eines Empfängers bewirken.

Der erste Kommunikationskanal kann für eine unidirektionale Simplex-Übertragung von einem Sender zu den Empfängern ohne einen Rückkanal ausgebildet sein. Die zweiten Teilcodes können für alle Benutzer gleich sein und der Schritt zur Übermittlung der zweiten Teilcodes über den ersten Kommunikationskanal kann das Aussenden einer Rundfunksendung, insbesondere eine Fernseh- oder Radiosendung, umfassen.

Ein Empfänger kann ein Mobilfunkendgerät, einen Rundfunkempfänger (Radio- oder Fernsehempfänger) und/ oder einen programmierbaren Computer aufweisen. Zweckmäßigerweise ist der Empfänger an den ersten Kommunikationskanal des Kommunikationssystems angepasst und weist ein entsprechendes Empfangsmodul auf, um von diesem Information oder Daten zu empfangen.

Der zweite Kommunikationskanal kann als Nachrichtenkanal eines Telekommunikationsdienstes oder des Internets ausgebildet sein. Die Empfangsmittel können zum Empfangen von Nachrichten von dem Nachrichtenkanal angepasst sein. Als Empfängeridentifikationsdaten können eine Teilnehmeridentifikation des Nachrichtenkanals, z.B. eine E-Mail oder Internetadresse oder eine Telekommunikationsdienst-/Teilnehmeridentifikationsnummer, herangezogen werden.

Die Verifikationsmittel können eine Vergleichseinrichtung zum Vergleichen von empfangenen Transaktionscodes mit erzeugten und in der Datenbank gespeicherten Transaktionscodes aufweisen, um die Gültigkeit der empfangenen Transaktionscodes festzustellen.

Die Verrechnungsmittel können einen Zähler für jeden Empfänger aufweisen, wobei die Zähler bei Erhalt eines gültigen Transaktionscodes aktualisiert werden, indem der Zähler des Empfängers, der einen gültigen Transaktionscode zurückgesendet hat, erhöht wird. Auf diese Weise kann beispielsweise festgestellt werden, wie viele gültige Transaktionscodes von den einzelnen Empfänger zurückgesendet wurden. Dies entspricht der Anzahl von Ereignissen, die von den jeweiligen Empfängern an dem ersten Kommunikationskanal beobachtet wurden. Durch Addition der Zählerstände kann auch ermittelt werden, wie viele empfangsbereite Empfänger sich in dem Kommunikationssystem befinden.

Zum Anlegen und Aktualisieren der Datenbank sind zweckmäßigerweise Datenbankmittel vorgesehen. In der Datenbank können unter anderem der Status der erzeugten Transaktionscodes (z.B. erzeugt, ausgegeben, empfangen/verbraucht, ungültig) und/oder Empfängeridentifikationsdaten für Empfänger, die einen gültigen Transaktionscode zurückgesendet haben, abgespeichert werden. Die Datenbank und die Datenbankmittel werden zweckmäßigerweise durch eine softwareimplementierte Datenbank auf einem Computersystem realisiert.

Die Verifikationsmittel können Zeitüberwachungsmittel zum Überprüfen einer Gültigkeitsdauer von zurückgesendeten Transaktionscodes aufweisen, um zurückgesendete Transaktionscodes nur bei einem Empfang innerhalb ihrer Gültigkeitsdauer als gültig zu kennzeichnen. Hierzu ist es beispielsweise möglich, die Gültigkeitsdauer eines Transaktionscodes in der Datenbank zu speichern, wobei die Zeitüberwachungsmittel beim Empfang eines Transaktionscodes die Datenbank auslösen, um die zugehörige Gültigkeitsdauer zu ermitteln.

Die vorliegende Erfindung kann beispielsweise Einsatz zur Abrechnung des Empfangs von Audio- oder Videostreamingdaten über ein Mobilfunksystem finden. Die Audio- oder Videodaten können über einen ersten Kommunikationskanal des Mobilfunksystems mittels eines Broadcast-Verfahrens an Endgeräte übertragen werden. Die Endgeräte können sich dann auf diesen ersten Kommunikationskanal aufschalten und die Audio- oder Videodaten empfangen, ohne dass sie sich hierfür bei dem Sender anmelden müssen. Die Abrechnung für diesen Dienst kann erfindungsgemäß dann dadurch erfolgen, dass ein aus zumindest zwei Teilcodes zusammengesetzter Transaktionscode mittels eines Nachrichtendienstes (z.B. SMS) zusammen mit einer Endgeräteidentifikation (Rufnummer) an eine Abrechnungszentrale gesendet wird. Der erste Teilcode kann dabei auf beliebige Weise zu dem Endgerät gelangen und der zweite Teilcode wird erfindungsgemäß zusammen mit den Audio- oder Videodaten empfangen.

Weitere mögliche Merkmale und Vorzüge der Erfindung ergeben sich aus den folgenden Beschreibungen von bevorzugten Ausführungsbeispielen, wobei jedoch angemerkt werden soll, dass sich die Erfindung nicht auf diese Ausführungsbeispiele beschränkt, sondern auch solche Kombinationen erfasst, die ein Fachmann der Anmeldung entnehmen kann.

Fig. 1 zeigt ein Ausführungsbeispiel für eine Vorrichtung zur manipulationssicheren Ermittlung von Empfängern in einem Kommunikationssystem.

Fig. 2 zeigt einen schematischen Ausschnitt aus einer Datenbank zur Speicherung von Transaktionscodes und zugehörigen Wertigkeiten.

Fig. 3 zeigt ein Beispiel für eine erfindungsgemäße Anordnung von Transaktionscodes.

Die Fig. 4 zeigt ein Ablaufdiagram für ein Ausführungsbeispiel eines erfindungsgemäßen Verfahrens zur manipulationssicheren Ermittlung von Empfängern.

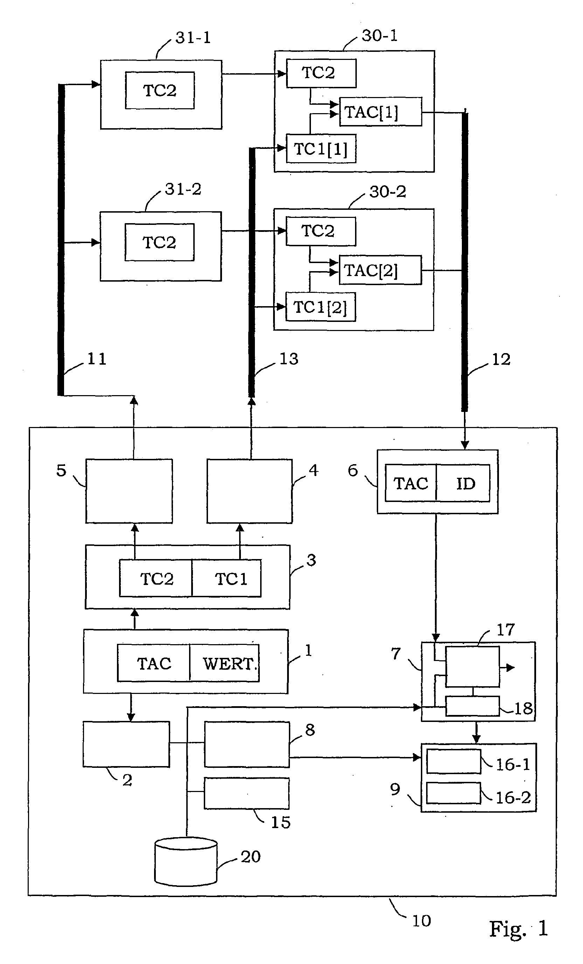

Fig. 1 zeigt eine Vorrichtung zur manipulationssicheren Ermittlung von Empfängern 30 in einem Kommunikationssystem gemäß einem Ausführungsbeispiel der Erfindung, die auch zur manipulationssicheren Verwaltung von Benutzerkonten für die Empfänger eingesetzt werden kann.

Der Zentralrechner 10 weist Transaktionscodeerzeugungsmittel 1 zum Erzeugen von eindeutigen Transaktionscodes TAC mit jeweiligen zugeordneten Wertigkeiten auf. Jeder Transaktionscode TAC wird mittels eines geeigneten Algorithmus derart erzeugt, dass der Transaktionscode nur einmal in dem System verwendet wird. Entsprechend der Anwendung wird den Transaktionscodes eine Wertigkeit zugeordnet. Diese kann für jeden Transaktionscode unterschiedlich oder für einige oder alle Transaktionscodes gleich sein.

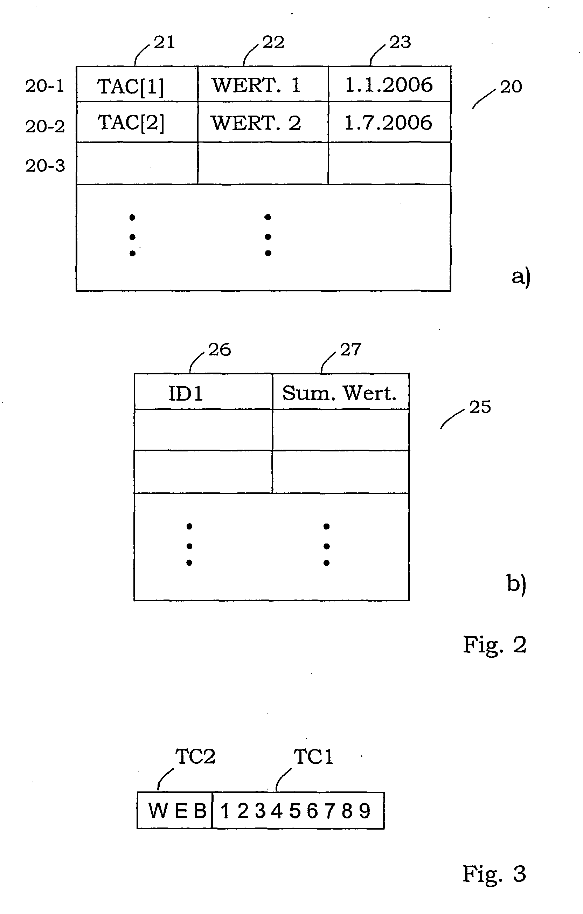

Die Transaktionscodes und die zugeordneten Wertigkeiten werden von Datenbankspeichermitteln 2 in einer Datenbank 20 abgespeichert. Die Fig. 2 zeigt einen schematischen Ausschnitt aus der Datenbank 20 mit drei Datensätzen 20-1 bis 20-3. Jeder Datensatz ist einem Transaktionscode TAC[1], TAC[2],...... zugeordnet, die in den Feldern 21 der Datenbank 20 gespeichert werden. Die jeweiligen Wertigkeiten zu den Transaktionscodes sowie Gültigkeitsdauern für die Transaktionscodes werden in den Feldern 22 und 23 gespeichert. Selbstverständlich kann die Anordnung der Felder in der Datenbank 20 auch anders erfolgen und insbesondere können weitere Daten in den einzelnen Datensätzen gespeichert werden.

Die erzeugten Transaktionscodes werden Transaktionscodeanordnungsmitteln 3 zum Anordnen der Transaktionscodes in zumindest zwei Teilcodes TC 1 und TC2 zugeführt. Die Anordnung der Transaktionscodes kann auf beliebige Art erfolgen. Beispielsweise werden die ersten M-Stellen eines N-stelligen Transaktionscodes dem zweiten Teilcode TC2 zugeordnet. Die weiteren (N - M)-Stellen bilden dann den ersten Teilcode TC1.

Die Fig. 3 zeigt ein Beispiel für eine derartige Anordnung von Transaktionscodes. Gemäß dem erläuterten Ausführungsbeispiel sind die zweiten Teilcodes TC2 für alle erzeugten Transaktionscodes gleich. Diese unterscheiden sich somit nur in ihrem ersten Teilcode TC1. Die Erzeugung und Anordnung der Transaktionscodes kann so erfolgen, dass zuerst eindeutige Transaktionscodes (gegebenenfalls unter Berücksichtigung von vorgegebenen Bedingungen, wie z.B. gleichen ersten drei Stellen) erzeugt und diese anschließend entsprechend dem Anordnungsschema aufgeteilt werden. Es ist aber auch möglich eindeutige erste Teilcodes TC1 mit vorgegebenen, gleichen zweiten Teilcodes TC2 gemäß dem Anordnungsschema zu kombinieren, um Transaktionscodes TAC zu erhalten.

Zu einem ersten Zeitpunkt werden die ersten Teilcodes TC1 der Transaktionscodes TAC von Ausgabemitteln 4 ausgegeben. Die Ausgabe kann unmittelbar an die Empfänger 30 erfolgen, z.B. mittels eines dritten Kommunikationskanals 13 wie in der Fig. 1 gezeigt. Alternativ können die Ausgabemittel 4 die Speicherung des ersten Teilcodes TC1 auf einem Speichermedium bewirken, das anschließend an die Empfänger 30 verteilt wird. Als Speichermedium ist jeder beliebige Informationsträger geeignet, der die ersten Teilcodes dauerhaft speichern kann, z.B. elektronisch als Diskette oder CD, oder auch in Papierform. Alternativ können die ersten Teilcodes auch über einen Nachrichtendienst, insbesondere einem SMS-Dienst oder einem E-Mail-Dienst, an die Empfänger 30 verteilt werden.

Nachdem die Empfänger 30-1, 30-2 ihre jeweiligen, individuellen Teilcodes TC1[1] und TC1 [2] erhalten haben, speichern die Empfänger 30 die erhaltenen ersten Teilcodes auf beliebige Weise. Bei einer Realisierung der Empfänger 30 als Mobilfunkendgeräte können die ersten Teilcodes TC1 bereits bei der Herstellung der Empfänger 30 fest in diese eingespeichert werden, oder sie werden z.B. über einen Mobilfunknachrichtendienst an das Endgerät übertragen und dort gespeichert. In einer Anwendung der Erfindung zur manipulationssicheren Verwaltung von Benutzerkonten ist es ausreichend, wenn die Benutzer die erhaltenen ersten Teilcodes zur weiteren Verwendung aufbewahren.

Zu einem zweiten Zeitpunkt, der beispielsweise zu einem bestimmten Ereignis gehört, das überwacht und ausgewertet werden soll, werden die zweiten Teilcodes TC2 von den Übermittlungsmitteln 5 über einen ersten Kommunikationskanal 11 an empfangsbereite Empfänger 30 übermittelt. Hierbei wird Information zur Identifizierung des zweiten Teilcodes den Empfängern 30 entweder direkt oder indirekt zugeführt. Der erste Kommunikationskanal 11 kann beispielsweise die Übertragung eines Radio- oder Fernsehsignals an die Empfänger 30 umfassen. Aufgrund der Übertragung des zweiten Teilcodes in Form eines Broadcast-Verfahrens empfangen alle Empfänger 30 die Information zur Identifizierung des zweiten Teilcodes TC2 gleichzeitig zu dem zweiten Zeitpunkt. Der zweite Teilcode kann dann von den Empfängern 30, die zu diesem Zeitpunkt empfangsbereit sind, übernommen und zum Zusammensetzen eines Transaktionscodes aus den empfangenen Teilcodes verwendet werden.

In dem in Fig. 1 gezeigten Ausführungsbeispiel wird hierfür der zweite Teilcode TC2 für eine vorgegebene Zeitdauer auf einer Anzeigeeinheit 31 dargestellt. Bei einer Übermittlung des zweiten Teilcodes in Form codierter Textinformationen, die zusammen mit einem Radio- oder Fernsehsignal ausgestrahlt wird, kann diese auf der Anzeigeeinheit 31 angezeigt werden, so dass sie von einem Benutzer des Systems gelesen werden kann. Der Empfänger 30 bzw. der Benutzer kann den zweiten Teilcode TC2 nach der Über-nahme vom ersten Kommunikationskanal 11 speichern, um die beiden Teilcodes zu einem späteren Zeitpunkt zusammenzusetzen.

Auf diese Weise kann die Rückmeldung über das vom Empfänger bzw. Benutzer über den ersten Kommunikationskanal 11 beobachtete Ereignis zu einem beliebigen späteren dritten Zeitpunkt erfolgen. Dies ermöglicht eine zeitliche Entkopplung und erlaubt eine große Flexibilität.

Die Rückmeldung des Empfängers 30 mit dem zusammengesetzten Transaktionscode und eindeutigen Identifikationsdaten ID des Empfängers 30 wird von Empfangsmitteln 6 empfangen. Die Übertragung der zusammengesetzten Transaktionsdaten und der eindeutigen Empfängeridentifikationsdaten über den zweiten Kommunikationskanal 12 kann beispielsweise über einen Mobilfunknachrichtendienst oder das Internet erfolgen. In diesem Fall kann eine Teilnehmeridentifikation des Mobilfunksystems bzw. eine E-Mail-Adresse als Identifikationsdaten für einen Empfänger herangezogen werden.

Der zweite Kommunikationskanal 12, über den die zusammengesetzten Transaktionscodes von den Empfängern zurückgesendet werden, ist zweckmäßiger Weise als Nachrichtenkanal eines Telekommunikationsdienstes oder des Internets ausgebildet. Dementsprechend sind die Empfangsmittel 6 zum Empfang von Nachrichten von dem Nachrichtenkanal gestaltet. Als eindeutige Empfängeridentifikationsdaten bieten sich die Teilnehmeridentifikationen des Nachrichtenkanals an.

Die empfangenen Transaktionscodes TAC werden von Verifikationsmittel 7 auf ihre Gültigkeit hin überprüft. Die Verifikationsmittel 7 weisen hierzu eine Vergleichseinrichtung 17 zum Vergleich von empfangenen Transaktionscodes mit erzeugten und in der Datenbank 20 gespeicherten Transaktionscodes auf. Zum Überprüfen der Gültigkeitsdauer von zurückgesendeten Transaktionscodes sind Zeitüberwachungsmittel 18 vorgesehen, sodass zurückgesendete Transaktionscodes nur bei einem Empfang innerhalb ihrer Gültigkeitsdauer als gültig gekennzeichnet werden. Hierzu greifen die Zeitüberwachungsmittel 18 auf die in der Datenbank in dem Feld 23 gespeicherten Gültigkeitsdauern der einzelnen Transaktionscodes zu. Weiterhin werden Transaktionscodes bei erstmaligem Empfang zum Zwecke der Verifikation in der Datenbank 20 als verbraucht gekennzeichnet. Bei einem weiteren Empfang des gleichen Transaktionscodes kann so dessen Ungültigkeit festgestellt werden. Auf diese Weise können Mehrfachverwendungen von Transaktionscodes verhindert werden.

Gültige Transaktionscodes werden von den Verifikationsmitteln an Verrechnungsmittel 9 weitergeleitet. Diese verrechnen die von Datenbankauslesemitteln 8 ermittelten Wertigkeiten der empfangenen; gültigen Transaktionscodes auf jeweiligen, den Empfängern zugeordneten Konten. Die Verrechnungsmittel 9 des in Fig. 1 gezeigten Ausführungsbeispiels weisen weiterhin Zähler 16 für die einzelnen Empfänger 30 auf. Bei Erhalt eines gültigen Transaktionscodes wird der zugehörige Zähler 16 aktualisiert, um die Anzahl der von einem Empfänger 30 erhaltenen, gültigen Transaktionscodes zu zählen. Weiterhin können Zähler vorgesehen sein, die eine Gesamtzahl der empfangsbereiten Empfänger anhand der zurückgesendeten, gültigen Transaktionscodes ermitteln. Auf diese Weise kann z.B. die Anzahl der empfangsbereiten Mobilfunkempfänger in einem bestimmten Teilbereich des Mobilfunknetzes ermittelt werden.

Der Zentralrechner 10 weist weiter Datenbankmittel 15 zum Anlegen und Aktualisieren der Datenbank 20 auf. Der Zentralrechner 10 kann als programmierbarer Universalrechner mit einem Prozessor, einem Speicher und Ein-/Ausgabeeinheiten (nicht in Fig. 1 gezeigt) realisiert werden. Die Ein-/Ausgabeeinheiten sind ausgebildet, um mit den Kommunikationskanälen 11-13 des Kommunikationssystems zu kommunizieren. Hierfür können entsprechende Schnittstellen und Hardwaremodule wie Sende- und Empfangseinheiten vorgesehen sein.

Die Fig. 2B zeigt einen Ausschnitt aus einer weiteren Datenbank 25, in der die Empfängerkonten bzw. Benutzerkonten geführt werden. Die Benutzerdatenbank 25 weist ein Feld 26 zur Identifizierung der einzelnen Empfänger bzw. Benutzer auf. Das Identifizierungsfeld 26 kann den Empfängeridentifikationsdaten zur eindeutigen Identifizierung der einzelnen Empfänger entsprechen. In einem weiteren Feld 27 werden die jeweiligen, den Empfängern zugeordneten Konten geführt, indem beispielsweise die Wertigkeiten der erhaltenen und gültigen Transaktionscodes addiert werden. Die Summe der berücksichtigten Wertigkeiten eines Empfängers bzw. Benutzers kann dann für Abrechnungszwecke verwendet werden. Beispielsweise kann die Summe der Wertigkeiten einem Geldbetrag entsprechen, den ein Benutzer für in Anspruch genommene Dienste durch Übernahme von Daten/Information zu dem zweiten Zeitpunkt von dem ersten Kommunikationskanal 11 des Kommunikationssystems zu entrichten hat. Die Summe der Wertigkeiten kann auch einer Anzahl von Bonuspunkten entsprechen, die ein Benutzer für die Inanspruchnahme der Dienste erhalten hat. Diese beiden Varianten können auch kombiniert werden, indem die vorliegende Erfindung jeweils zwei unterschiedliche Wertigkeiten für einen Transaktionscode vorsieht. In der Benutzerkontendatenbank 25 sind dann zwei Felder zum akkumulieren der einzelnen Wertigkeiten vorgesehen.

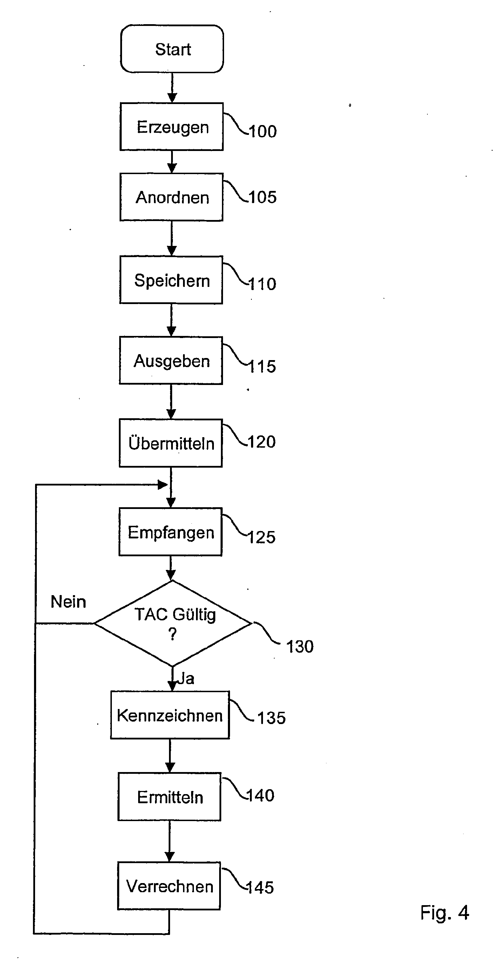

Die Fig. 4 zeigt ein Ablaufdiagramm für ein Ausführungsbeispiel eines erfindungsgemäßen Verfahrens zur manipulationssicheren Ermittlung von Empfängern. In Schritt 100 werden eindeutige Transaktionscodes mit zugeordneten Wertigkeiten erzeugt. Diese werden in einem Schritt 105 in zumindest zwei Teilcodes angeordnet. Wie bereits erwähnt, können die Transaktionscodes jedoch auch bereits aus zwei Teilcodes bestehend erzeugt werden. Die Schritt 100 und 105 werden dann gemeinsam ausgeführt.

Die erzeugten Transaktionscodes werden in einem Schritt 110 in einer Datenbank 20 zusammen mit ihren zugeordneten Wertigkeiten abgespeichert. In Schritt 115 werden die ersten Teilcodes zu einem ersten Zeitpunkt ausgegeben, so dass sie zu den Empfängern 30 gelangen, um dort für die weitere Verarbeitung bereitgehalten zu werden. Die Schritte 110 und 115 sind unabhängig voneinander und können auch in einer umgekehrten Reihenfolge ausgeführt werden.

In Schritt 120 werden zu einem zweiten Zeitpunkt die zweiten Teilcodes über einen ersten Kommunikationskanal an empfangsbereite Empfänger übermittelt. Diese fügen die erhaltenen Teilcodes zu einem zusammengesetzten Transaktionscode zusammen.

Das erfindungsgemäße Verfahren kann selbstverständlich auf mehr als zwei Teilcodes erweitert werden. Beispielsweise wird ein dritter und/oder vierter Teilcode zu einem Transaktionscode erzeugt und zu einem dritten bzw. vierten Zeitpunkt an die Empfänger übermittelt. Diese fügen dann die erhaltenen Teilcodes zu einem zusammengesetzten Transaktionscode zusammen.

In Schritt 125 wird ein von einem Empfänger gesendeter, zusammengesetzter Transaktionscode aus den einzelnen Teilcodes zusammen mit eindeutigen Identifikationsdaten des Empfängers empfangen.

In Schritt 130 wird die Gültigkeit eines empfangenen Transaktionscodes überprüft. Dies kann durch Vergleich mit den in der Datenbank 20 gespeicherten Transaktionscodes geschehen. Ein ungültiger Transaktionscode wird verworfen und das Verfahren mit dem Empfang eines neuen Transaktionscodes in Schritt 125 fortgesetzt.

Ein gültiger Transaktionscode wird beim erstmaligen Empfang in Schritt 135 in der Datenbank 20 als Verbrauch gekennzeichnet, um eine wiederholte Nutzung des Transaktionscodes zu vermeiden.

Die Wertigkeit der empfangenen, gültigen Transaktionscodes wird in Schritt 140 aus der Datenbank 20 ermittelt.

Die Auswertung der empfangenen, gültigen Transaktionscodes erfolgt in Schritt 145 durch Verrechnen der ermittelten Wertigkeiten auf jeweiligen, den Empfängern bzw. Benutzern zugeordneten Konten. Die Verrechnung erfolgt beispielsweise durch Summenbildung aller für einen bestimmten Empfänger bzw. Benutzer mit Erhalt von gültigen Transaktionscodes ermittelten, zugehörigen Wertigkeiten. Diese Summen können dann von den Benutzern für die Nutzung von Diensten des Kommunikationssystems zu entrichtenden Geldbeträgen oder für die Nutzung erhaltenen Bonuswerten entsprechen.

Durch das Aufteilen der Transaktionscodes in zwei Teilcodes, das getrennte Übermitteln der einzelnen Teilcodes an die Empfänger bzw. Benutzer und die Überprüfung der Gültigkeit der empfangenen, von den Benutzern zusammengesetzten Transaktionscodes, kann eine manipulationssichere Verwaltung der Empfänger- bzw. Benutzerkonten gewährleistet werden. Auf diese Weise wird ausgeschlossen, dass Benutzer Transaktionscodes mehrfach verwenden, ungültige Transaktionscodes verwenden oder nicht zusammengehörige Teilcodes zusammenfügen.

Die vorliegende Erfindung wird vorzugsweise durch Programmierung eines Computersystems implementiert, das die benötigten Mittel realisiert. Hierfür sind beliebige programmierbare Datenverarbeitungseinrichtungen geeignet. Die Datenbank 20 kann mit einem bekannten Datenbanksystem realisiert werden. Der erste Kommunikationskanal 11 ist vorzugsweise als ein System zur Übertragung von Broadcast-Nachrichten ausgebildet. Hierfür sind insbesondere Rundfunk- und Fernsehsysteme sowie gemeinsame Kanäle in Mobilfunksystemen geeignet. Der zweite Kommunikationskanal 12 ist zweckmäßig als Nachrichtenkanal eines Telekommunikationsdienstes oder des Internets ausgebildet. Auch der dritte Kommunikationskanal 13 kann ein Nachrichtenkanal eines Telekommunikationsdienstes oder des Internets sein. Geeignete Empfänger 30 weisen ein Mobilfunkgerät, einen Rundfunkempfänger oder andere Empfangsmittel zum Empfang von Broadcast-Nachrichten über den ersten Kommunikationskanal 11 sowie einen programmierbaren Computer auf.

Die einzelnen Teile der Erfindung sind selbstverständlich nicht auf die beschriebenen Kombinationen von Merkmalen beschränkt und können auch in anderen Kombinationen bzw. unabhängig voneinander eingesetzt werden. Die einzelnen Erfindungsgedanken können erfindungsgemäß auch selbständig oder in Verbindung mit anderen Gegenständen zur Anwendung kommen.

## Patentansprüche

1. Verfahren zur manipulationssicheren Ermittlung von Empfängern (30) in einem Kommunikationssystem, mit den Schritten:
Erzeugen von eindeutigen Transaktionscodes und Zuordnen jeweils einer Wertigkeit zu den erzeugten Transaktionscodes; Abspeichern der Transaktionscodes mit den zugeordneten Wertigkeiten in einer Datenbank (20);
Anordnen der Transaktionscodes in zumindest zwei Teilcodes; Ausgeben der ersten Teilcodes der Transaktionscodes zu einem ersten Zeitpunkt;
Übermitteln der zweiten Teilcodes zu einem zweiten Zeitpunkt über einen ersten Kommunikationskanal (11) des Kommunikationssystems an empfangsbereite Empfänger (30); Empfangen eines aus den Teilcodes zusammengesetzten Transaktionscodes, der von einem Empfänger (30) gesendet wird, über einen zweiten Kommunikationskanal (12) zusammen mit eindeutigen Identifikationsdaten des Empfängers (30);
Überprüfen der Gültigkeit des empfangenen Transaktionscodes durch Vergleich mit den in der Datenbank (20) abgespeicherten Transaktionscodes;
Ermitteln der Wertigkeit des empfangenen, gültigen Transaktionscodes aus der Datenbank (20); und
Verrechnen der ermittelten Wertigkeit auf einem dem Empfänger (30) zugeordneten Konto.

2. Verfahren nach Anspruch 1, wobei die Verteilung der ersten Teilcodes über einen dritten Kommunikationskanal (13) erfolgt, der eine individuelle Übermittlung der ersten Teilcodes an die Empfänger (30) ermöglicht.

3. Verfahren nach Anspruch 1 oder 2, wobei die ersten Teilcodes über einen Informationsträger, der die ersten Teilcodes dauerhaft speichert, an die Empfänger (30) verteilt werden.

4. Verfahren nach einem der Ansprüche 1 bis 3, wobei der zweite Teilcode derart über den ersten Kommunikationskanal (11) übermittelt wird, dass er zu dem zweiten Zeitpunkt für eine vorgegebene Zeitdauer den Empfängern (30) zur Übernahme und Speicherung angeboten wird.

5. Verfahren nach Anspruch 4, wobei der zweite Teilcode für die vorgegebene Zeitdauer auf einer Anzeigeeinheit (31) dargestellt wird.

6. Verfahren gemäß zumindest einem der vorhergehenden Ansprüche, wobei der erste Kommunikationskanal (11) eine drahtlose Übertragung von Information zur Identifizierung des zweiten Teilcodes in Form eines Broadcast-Verfahrens umfasst, das derart ausgebildet ist, dass eine Vielzahl von Empfängern (30) gleichzeitig an der Übertragung teilnehmen können.

7. Verfahren gemäß zumindest einem der vorhergehenden Ansprüche, wobei der erste Kommunikationskanal (11) die Übertragung eines Radio- oder Fernsehsignals umfasst, gegebenenfalls mit zusätzlicher codierter Textinformation, insbesondere mittels Videotext oder Radio Daten System RDS.

8. Verfahren gemäß zumindest einem der vorhergehenden Ansprüche, wobei der erste und zweite Zeitpunkt unterschiedlich sind und die Transaktionscodes für ein bestimmtes Ereignis, das zu dem zweiten Zeitpunkt stattfindet und über den ersten Kommunikationskanal (11) beobachtbar ist, erzeugt werden, um festzustellen, welche Empfänger (30) das bestimmte Ereignis beobachten.

9. Verfahren gemäß zumindest einem der vorhergehenden Ansprüche, wobei ein Empfänger (30) den ersten Kommunikationskanal (11) beobachtet und auf die Übermittlung des zweiten Teilcodes durch ein Abspeichern des zweiten Teilcodes, ein Zusammenfügen der empfangenen ersten und zweiten Teilcodes zu einem zusammengesetzten Transaktionscode und ein Übertragen des zusammengesetzten Transaktionscodes über den zweiten Kommunikationskanal (12) zusammen mit den eindeutigen Identifikationsdaten des Empfängers (30) reagiert.

10. Verfahren gemäß zumindest einem der vorhergehenden Ansprüche, wobei die Übertragung der zusammengesetzten Transaktionscodes und der eindeutigen Empfängeridentifikationsdaten über den zweiten Kommunikationskanal (12) mittels eines Mobilfunknachrichtendienstes, insbesondere Short Message Service SMS oder Multimedia Message Service MMS, oder das Internet erfolgt, wobei eine Teilnehmeridentifikation, insbesondere eine Mobilfunkteilnehmernummer oder eine Emailadresse, als Identifikationsdaten für einen Empfänger (30) herangezogen wird.

11. Verfahren gemäß zumindest einem der vorhergehenden Ansprüche, wobei das Anordnen der Transaktionscodes in zwei Teilcodes derart erfolgt, dass der erste Teilcode für die Empfänger (30) individuell und der zweite Teilcode für alle Empfänger (30) gleich ist.

12. Verfahren gemäß zumindest einem der vorhergehenden Ansprüche, mit den weiteren Schritten:
Kennzeichnen eines zurückgesendeten, zusammengesetzten Transaktionscodes bei erstmaligem Empfang zum Zwecke der Verifikation als verbraucht; und
Kennzeichnen des gleichen Transaktionscodes bei einem weiteren Empfang als ungültig.

13. Verfahren gemäß zumindest einem der vorhergehenden Ansprüche, wobei jedem Transaktionscode eine Gültigkeitsdauer zugeordnet ist und zurückgesendete Transaktionscodes nur bei einem Empfang innerhalb ihrer Gültigkeitsdauer als gültig **gekennzeichnet** werden.

14. Verfahren gemäß zumindest einem der vorhergehenden Ansprüche, mit zumindest einem der folgenden Schritte:
Ermitteln der Empfängerkonten für die Empfänger (30), die einen gültigen Transaktionscode zurückgesendet haben, anhand der empfangenen Empfängeridentifikationsdaten; Aktualisieren der Datenbank (20) bei Empfang eines zurückgesendeten, zusammengesetzten Transaktionscodes durch Eintragen der Empfängeridentifikationsdaten des Empfängers (30), der den gültigen Transaktionscode zurückgesendet hat; Erstellen einer Liste der Empfänger (30), die zu dem ersten Zeitpunkt empfangsbereit waren;
Absenden einer Nachricht an einen Empfänger (30), der einen gültigen Transaktionscode zurückgesendet hat;
Erzeugen eines neuen Transaktionscodes für einen Empfänger (30), der einen gültigen Transaktionscode zurückgesendet hat, und Ausgeben des ersten Teilcodes des neuen Transaktionscodes an den Empfänger (30).

15. Verfahren gemäß zumindest einem der vorhergehenden Ansprüche, wobei ein dritter und/oder vierter Teilcode zu einem Transaktionscode erzeugt wird und der dritte und/oder vierte Teilcode zu einem dritten bzw. vierten Zeitpunkt über den ersten Kommunikationskanal (11) an die Empfänger (30) übermittelt wird/werden.

16. Vorrichtung zur manipulationssicheren Ermittlung von Empfängern (30) in einem Kommunikationssystem, mit Transaktionscodeerzeugungsmitteln (1) zum Erzeugen von eindeutigen Transaktionscodes und Zuordnen jeweils einer Wertigkeit zu den erzeugten Transaktionscodes; Datenbankspeichermitteln (2) zum Abspeichern der Transaktionscodes mit den zugeordneten Wertigkeiten in einer Datenbank;
Transaktionscodeanordnungsmitteln (3) zum Anordnen der Transaktionscodes in zumindest zwei Teilcodes; Ausgabemitteln (4) zum Ausgeben der ersten Teilcodes der Transaktionscodes zu einem ersten Zeitpunkt; Übermittlungsmitteln (5) zum Übermitteln des zweiten Teilcodes zu dem zweiten Zeitpunkt über einen ersten Kommunikationskanal (11) des Kommunikationssystems an empfangsbereite Empfänger (30);
Empfangsmitteln (6) zum Empfangen eines aus den Teilcodes zusammengesetzten Transaktionscodes, der von einem Empfänger (30) gesendet wird, über einen zweiten Kommunikationskanal (12) zusammen mit eindeutigen Identifikationsdaten des Empfängers (30);
Verifikationsmitteln (7) zum Überprüfen der Gültigkeit des empfangenen Transaktionscodes durch Vergleich mit den in der Datenbank (20) abgespeicherten Transaktionscodes; Datenbankauslesemitteln (8) zum Ermitteln der Wertigkeit des empfangenen, gültigen Transaktionscodes aus der Datenbank (20); und
Verrechnungsmitteln (9) zum Verrechnen der ermittelten Wertigkeit auf einem dem Empfängern (30) zugeordneten Konto.

17. Vorrichtung nach Anspruch 16, wobei die Ausgabemittel (4) die Speicherung des ersten Teilcodes auf einem Speichermedium bewirken, das an die Empfänger (30) verteilet wird.

18. Vorrichtung nach Anspruch 16, wobei die Ausgabemittel (4) die ersten Teilcodes über einen Nachrichtendienst, insbesondere einen SMS-Dienst oder einen Email-Dienst, an die Empfänger (30) verteilen.

19. Vorrichtung gemäß zumindest einem der vorhergehenden Ansprüche, wobei die Übermittlungsmittel (5) die zweiten Teilcodes derart über den ersten Kommunikationskanal (11) übermitteln, dass Information zur Identifizierung des zweiten Teilcodes zu dem zweiten Zeitpunkt einer Vielzahl der Empfänger (30) zugeführt wird.

20. Vorrichtung gemäß zumindest einem der vorhergehenden Ansprüche, wobei die Übermittlungsmittel (5) eine Anzeige des zweiten Teilcodes für eine vorgegebene Zeitdauer auf einer Anzeigevorrichtung (31) eines Empfängers (30) bewirken.

21. Vorrichtung gemäß zumindest einem der vorhergehenden Ansprüche, wobei der erste Kommunikationskanal (11) für eine unidirektionale Simplex-Übertragung von einem Sender zu den Empfängern (30) ohne einen Rückkanal ausgebildet ist.

22. Vorrichtung gemäß zumindest einem der vorhergehenden Ansprüche, wobei ein Empfänger (30) ein Mobilfunkendgerät, einen Rundfunkempfänger und/oder einen programmierbaren Computer aufweist.

23. Vorrichtung gemäß zumindest einem der vorhergehenden Ansprüche, wobei der zweite Kommunikationskanal (12) als Nachrichtenkanal eines Telekommunikationsdienstes oder des Internets und die Empfangsmittel zum Empfang von Nachrichten von dem Nachrichtenkanal ausgebildet sind, wobei als Empfängeridentifikationsdaten eine Teilnehmeridentifikation des Nachrichtenkanals herangezogen wird.

24. Vorrichtung gemäß zumindest einem der vorhergehenden Ansprüche, wobei die Verifikationsmittel (7) eine Vergleichseinrichtung (17) zum Vergleich von empfangenen Transaktionscodes mit erzeugten und in der Datenbank (20) gespeicherten Transaktionscodes aufweisen.

25. Vorrichtung gemäß zumindest einem der vorhergehenden Ansprüche, wobei die Verrechnungsmittel (7) Zähler (16) für Empfänger (30) aufweisen, die bei Erhalt eines gültigen Transaktionscodes aktualisiert werden, in dem die Zähler (16) der Empfänger (30), die einen gültigen Transaktionscode zurückgesendet haben, erhöht werden.

26. Vorrichtung gemäß zumindest einem der vorhergehenden Ansprüche, mit Datenbankmitteln (15) zum Anlegen und Aktualisieren der Datenbank (20), in welcher unter anderem der Status für erzeugte Transaktionscodes und Empfängeridentifikationsdaten für Empfänger (30), die einen gültigen Transaktionscode zurückgesendet haben, abgespeichert werden.

27. Vorrichtung gemäß zumindest einem der vorhergehenden Ansprüche, wobei die Verifikationsmittel (7) Zeitüberwachungsmittel (18) zum Überprüfen einer Gültigkeitsdauer von zurückgesendeten Transaktionscodes aufweisen, wobei zurückgesendete Transaktionscodes nur bei einem Empfang innerhalb ihrer Gültigkeitsdauer als gültig **gekennzeichnet** werden.

28. Verfahren zur manipulationssicheren Verwaltung von Benutzerkonten, mit den Schritten:
Erzeugen von eindeutigen Transaktionscodes und Zuordnen jeweils einer Wertigkeit zu den erzeugten Transaktionscodes, wobei die Transaktionscodes aus zumindest zwei Teilcodes bestehen;
Ausgeben der ersten Teilcodes der Transaktionscodes zu einem ersten Zeitpunkt;
Übermitteln des zweiten Teilcodes zu einem zweiten Zeitpunkt an Benutzer, die zu diesem Zeitpunkt einen Dienst nutzen; Empfangen eines aus den Teilcodes zusammengesetzten Transaktionscodes, der von einem Benutzer gesendet wird, zusammen mit eindeutigen Identifikationsdaten des Benutzers;
Überprüfen der Gültigkeit des empfangenen Transaktionscodes;
Ermitteln der Wertigkeit des empfangenen, gültigen Transaktionscodes; und
Verrechnen der ermittelten Wertigkeit auf einem dem Benutzer zugeordneten Benutzerkonto.

29. Verfahren nach Anspruch 28, wobei ein Aufteilen der Transaktionscodes und die Ausgabe der ersten Teilcodes derart erfolgen, dass die Benutzer jeweils individuelle erste Teilcodes über ein Kommunikationsmedium erhalten.

30. Verfahren nach Anspruch 28 oder 29, wobei die zweiten Teilcodes für alle Benutzer gleich sind und der Schritt zur Übermittlung der zweiten Teilcodes über einen ersten Kommunikationskanal (11) das Aussenden einer Rundfunksendung, insbesondere eine Fernseh- oder Radiosendung, umfasst.

31. Verfahren nach einem der Ansprüche 28 bis 30, wobei die Benutzer den zweiten Teilcode mittels eines Radio- oder Fernsehprogramms erhalten, das zu dem zweiten Zeitpunkt ausgestrahlt wird.

32. Verfahren gemäß zumindest einem der Ansprüche 28 bis 31, wobei die Benutzer die ersten Teilcodes mittels eines elektronischen Nachrichtendienstes, per Post oder über ein Printmediums erhalten.

33. Verfahren gemäß zumindest einem der Ansprüche 28 bis 32, wobei die Benutzer einen ersten Kommunikationskanal (11) beobachten, von diesem zu dem zweiten Zeitpunkt den zweiten Teilcode und gegebenenfalls zu einem dritten Zeitpunkt einen dritten Teilcode empfangen, die Teilcode zusammensetzen, um einen zusammengesetzten Transaktionscode zu bilden, und den zusammengesetzten Transaktionscode über einen zweiten Kommunikationskanal (12) zusammen mit den eindeutigen Benutzeridentifikationsdaten zurücksenden.

34. Verfahren gemäß Anspruch 33, wobei die Übertragung der zusammengesetzten Transaktionscodes und der eindeutigen Benutzeridentifikationsdaten über den zweiten Kommunikationskanal (12) mittels eines Mobilfunknachrichtendienstes, über das Internet oder per Post erfolgt.

35. Verfahren zur manipulationssicheren Verwaltung von Benutzerkonten, mit den Schritten:
Erzeugen von eindeutigen Transaktionscodes und Zuordnen jeweils einer Wertigkeit zu den erzeugten Transaktionscodes; Anordnen der Transaktionscodes in zumindest zwei Teilcodes, wobei die ersten Teilcodes für die Benutzer individuell sind; Ausgeben der ersten, individuellen Teilcodes der Transaktionscodes zu einem ersten Zeitpunkt über ein Kommunikationsmedium;
Übermitteln des zweiten Teilcodes zu einem zweiten Zeitpunkt an Benutzer, die zu diesem Zeitpunkt einen Dienst nutzen; Empfangen eines aus den Teilcodes zusammengesetzten Transaktionscodes, der von einem Benutzer gesendet wird, zusammen mit eindeutigen Identifikationsdaten des Benutzers;
Überprüfen der Gültigkeit des empfangenen Transaktionscodes;
Ermitteln der Wertigkeit des empfangenen, gültigen Transaktionscodes; und
Verrechnen der ermittelten Wertigkeit auf einem dem Benutzer zugeordneten Benutzerkonto.

36. Verfahren zur manipulationssicheren Verwaltung von Benutzerkonten, mit den Schritten:
Erzeugen von eindeutigen Transaktionscodes und Zuordnen jeweils einer Wertigkeit zu den erzeugten Transaktionscodes, wobei die Transaktionscodes aus zumindest zwei Teilcodes bestehen und die zweiten Teilcodes für alle Benutzer gleich sind;
Ausgeben der ersten Teilcodes der Transaktionscodes zu einem ersten Zeitpunkt;
Übermitteln des zweiten Teilcodes zu einem zweiten Zeitpunkt mittels einer Rundfunksendung an Benutzer, die zu diesem Zeitpunkt die Rundfunksendung empfangen;
Empfangen eines aus den Teilcodes zusammengesetzten Transaktionscodes, der von einem Benutzer gesendet wird, zusammen mit eindeutigen Identifikationsdaten des Benutzers;
Überprüfen der Gültigkeit des empfangenen Transaktionscodes;
Ermitteln der Wertigkeit des empfangenen, gültigen Transaktionscodes; und
Verrechnen der ermittelten Wertigkeit auf einem dem Benutzer zugeordneten Benutzerkonto.

37. Verfahren zur manipulationssicheren Verwaltung von Benutzerkonten, mit den Schritten:
Erzeugen von eindeutigen Transaktionscodes und Zuordnen jeweils einer Wertigkeit zu den erzeugten Transaktionscodes, wobei die Transaktionscodes aus zumindest zwei Teilcodes bestehen;
Ausgeben der ersten Teilcodes der Transaktionscodes zu einem ersten Zeitpunkt, wobei die Benutzer die ersten Teilcodes mittels eines elektronischen Nachrichtendienstes, per Post oder über ein Printmediums erhalten;
Übermitteln des zweiten Teilcodes zu einem zweiten Zeitpunkt an Benutzer, die zu diesem Zeitpunkt einen Dienst nutzen; Empfangen eines aus den Teilcodes zusammengesetzten Transaktionscodes, der von einem Benutzer gesendet wird, zusammen mit eindeutigen Identifikationsdaten des Benutzers;
Überprüfen der Gültigkeit des empfangenen Transaktionscodes;
Ermitteln der Wertigkeit des empfangenen, gültigen Transaktionscodes; und
Verrechnen der ermittelten Wertigkeit auf einem dem Benutzer zugeordneten Benutzerkonto.

38. Verfahren zur manipulationssicheren Verwaltung von Benutzerkonten, mit den Schritten:
Erzeugen von eindeutigen Transaktionscodes und Zuordnen jeweils einer Wertigkeit zu den erzeugten Transaktionscodes, wobei die Transaktionscodes aus zumindest zwei Teilcodes bestehen;
Ausgeben der ersten Teilcodes der Transaktionscodes zu einem ersten Zeitpunkt;
Übermitteln des zweiten Teilcodes zu einem zweiten Zeitpunkt über einen ersten Kommunikationskanal (11) an Benutzer, die zu diesem Zeitpunkt einen Dienst nutzen, wobei die Benutzer den ersten Kommunikationskanal (11) beobachten und von diesem zu dem zweiten Zeitpunkt den zweiten Teilcode empfangen;
Zusammensetzen der Teilcodes durch Benutzer und Senden der zusammengesetzten Transaktionscodes zusammen mit eindeutigen Identifikationsdaten der Benutzer;
Empfangen eines von einem Benutzer gesendeten, zusammengesetzten Transaktionscodes und der eindeutigen Identifikationsdaten des Benutzers;
Überprüfen der Gültigkeit des empfangenen Transaktionscodes;
Ermitteln der Wertigkeit des empfangenen, gültigen Transaktionscodes; und
Verrechnen der ermittelten Wertigkeit auf einem dem Benutzer zugeordneten Benutzerkonto.

39. Vorrichtung zur manipulationssicheren Verwaltung von Benutzerkonten, mit:
Transaktionscodeerzeugungsmitteln (1) zum Erzeugen von eindeutigen Transaktionscodes und Zuordnen jeweils einer Wertigkeit zu den erzeugten Transaktionscodes, wobei die Transaktionscodes aus zumindest zwei Teilcodes bestehen; Ausgabemitteln (4) zum Ausgeben der ersten Teilcodes der Transaktionscodes zu einem ersten Zeitpunkt; Übermittlungsmitteln (5) zum Übermitteln des zweiten Teilcodes zu einem zweiten Zeitpunkt an Benutzer, die zu diesem Zeitpunkt einen Dienst nutzen;
Empfangsmitteln (6) zum Empfangen von einem aus den Teilcodes zusammengesetzten Transaktionscodes, der von einem Benutzer gesendet wird, zusammen mit eindeutigen Identifikationsdaten des Benutzers;
Verifikationsmitteln (7) zum Überprüfen der Gültigkeit des empfangenen Transaktionscodes;
Wertigkeitsermittlungsmitteln zum Ermitteln der Wertigkeit des empfangenen, gültigen Transaktionscodes; und
Verrechnungsmitteln (9) zum Verrechnen der ermittelten Wertigkeit auf einem dem Benutzer zugeordneten Benutzerkonto.
